# EUROPEAN PATENT APPLICATION

(11) **EP 4 628 371 A1**
(43) Date of publication of application: **08.10.2025**
(21) Application number: 23896263.3
(22) Date of filing: 09.10.2023
(51) Int. Cl.: B60T 8/1755, B60T 8/26

(54) **BRAKING FORCE DISTRIBUTION METHOD, STORAGE MEDIUM, BRAKING FORCE DISTRIBUTION APPARATUS, AND VEHICLE**

(30) Priority: 30.11.2022 CN 202211518669
(71) Applicant: Nio Technology (Anhui) Co., Ltd, Hefei City, Anhui 230601 (CN)
(72) Inventor: HAN, Jianrong, Hefei, Anhui 230601 (CN); XIAO, Bohong, Hefei, Anhui 230601 (CN); YUAN, Da, Hefei, Anhui 230601 (CN); WU, Liren, Hefei, Anhui 230601 (CN); FANG, Cheng, Hefei, Anhui 230601 (CN)
(74) Representative: Vossius & Partner Patentanwälte Rechtsanwälte mbB
(86) International application number: PCT/CN2023/123539
(87) International publication number: WO 2024/114107

(57) **Abstract**

The disclosure provides a braking force distribution method for a vehicle, a computer-readable storage medium, a braking force distribution apparatus and a vehicle. The braking force distribution method includes the following steps: determining, in response to stepping on a brake pedal, whether front wheels are located on a low-traction road; distributing a theoretical braking force depending on a stepped extent of the brake pedal to a front axle if the front wheels are located on the low-traction road; otherwise, distributing the theoretical braking force to both the front axle and a rear axle. By controlling a hydraulic brake unit for rear wheels to stop operating and only distributing a braking force to the front wheels when detecting that the front wheels are located on the low-traction road, the braking force distribution method according to the disclosure can reliably prevent the dangerous phenomenon of locking and side slippage of the rear wheels.

## Description

### Technical Field

The disclosure relates to a braking force distribution method for a vehicle, a computer-readable storage medium, a braking force distribution apparatus, and a vehicle.

### Background Art

It is known that when a vehicle runs on a road with a relatively low traction coefficient, for example, a snow-covered road, it is necessary to pay attention to the braking stability of the vehicle. An excess braking force may lead to wheel locking in the case of a low available ground traction. The steering function of the vehicle is disabled if front wheels are locked or locked and then dragged to slip; and the vehicle may sideslip under the action of a slight lateral force if rear wheels are locked or locked and then dragged to slip. The side slip is extremely dangerous.

In view of this, an Antilock Brake System (ABS) integrated in a vehicle control system is intended to distribute a braking force as far as possible on extreme roads in such a way that the front and rear wheels are locked and dragged to slip simultaneously. Even in this case, it is still impossible to eliminate dangers caused by the locked rear wheels on the extreme roads.

### Summary

According to various aspects, an objective of the disclosure is to provide a braking force distribution method, a braking force distribution apparatus, and a vehicle that can achieve improved braking stability.

In addition, the disclosure also aims to solve or alleviate other technical problems existing in the prior art.

The disclosure provides a braking force distribution method to solve the above problems, the method specifically including the following steps:
determining, in response to stepping on a brake pedal, whether front wheels are located on a low-traction road;
distributing a theoretical braking force depending on a stepped extent of the brake pedal to a front axle if the front wheels are located on the low-traction road;
otherwise, distributing the theoretical braking force to both the front axle and a rear axle.

In the braking force distribution method according to an aspect of the disclosure, whether the front wheels are located on the low-traction road is determined from a degree of dynamic changes in an axle speed of the front axle and a braking force of a front wheel brake.

In the braking force distribution method according to an aspect of the disclosure, the step of determining whether the front wheels are located on a low-traction road includes the following substeps:
acquiring the axle speed of the front axle and the braking force of the front wheel brake in response to stepping on the brake pedal;
acquiring an absolute value of a difference between the axle speeds of the front axle before and after filtering; and
determining that the front wheels are located on the low-traction road if the absolute value is greater than a preset absolute value threshold and the braking force of the front wheel brake is less than a preset braking force threshold.

In the braking force distribution method according to an aspect of the disclosure, after acquiring the absolute value of the difference between the axle speeds of the front axle before and after filtering, the method further includes the following substeps:
performing timing if the absolute value is greater than the preset absolute value threshold, otherwise returning to zero; and
determining that the front wheels are located on the low-traction road if a duration of the timing is greater than a preset time threshold and the braking force of the front wheel brake is less than the preset braking force threshold.

In the braking force distribution method according to an aspect of the disclosure, the axle speed of the front axle is acquired based on a wheel speed of a left front wheel and a wheel speed of a right front wheel.

In the braking force distribution method according to an aspect of the disclosure, the theoretical braking force is distributed to both the front axle and the rear axle based on a braking force distribution coefficient output by an ABS and/or a CRBS of the vehicle.

In the braking force distribution method according to an aspect of the disclosure, the acquired axle speed of the front axle is filtered by means of a PT1 filter.

According to another aspect of the disclosure, a computer-readable storage medium having a computer program stored thereon is provided, where the computer program, when executed by a processor, causes the processor to carry out the above-described braking force distribution method for a vehicle.

According to another aspect of the disclosure, a braking force distribution apparatus for implementing such a method is provided, where the braking force distribution apparatus has a determination module and a calculation module in communication connection with each other, the determination module is configured to determine whether front wheels are located on a low-traction road in response to stepping on a brake pedal and input a determination result to the calculation module, and the calculation module is configured to conclude, based on the determination result, to distribute a theoretical braking force to a front axle or to distribute the theoretical braking force to both the front axle and a rear axle.

According to a further aspect of the disclosure, a vehicle having such a braking force distribution apparatus is provided, and the vehicle may have the characteristics and advantages as described above, which will not be repeated herein.

By stopping activating a hydraulic brake unit for rear wheels and only distributing the braking force to the front wheels when detecting that the front wheels are located on the low-traction road, such a braking force distribution method can reliably prevent the dangerous phenomenon of locking and side slippage of the rear wheels.

### Brief Description of The Drawings

The above and other features of the disclosure will become apparent with reference to the accompany drawings, in which:
FIG. 1 illustrates a general flowchart of a braking force distribution method according to the disclosure; and
FIG. 2 illustrates a sub-flowchart of an implementation of the braking force distribution method.

### Detailed Description of Embodiments

It can be readily understood that according to the technical solution of the disclosure, those of ordinary skill in the art may propose multiple interchangeable structures and implementations without changing the essential spirit of the disclosure. Therefore, the following specific embodiments and the accompanying drawings are merely exemplary descriptions of the technical solutions of the disclosure, and should not be construed as the entirety of the disclosure or construed as limiting the technical solution of the disclosure.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

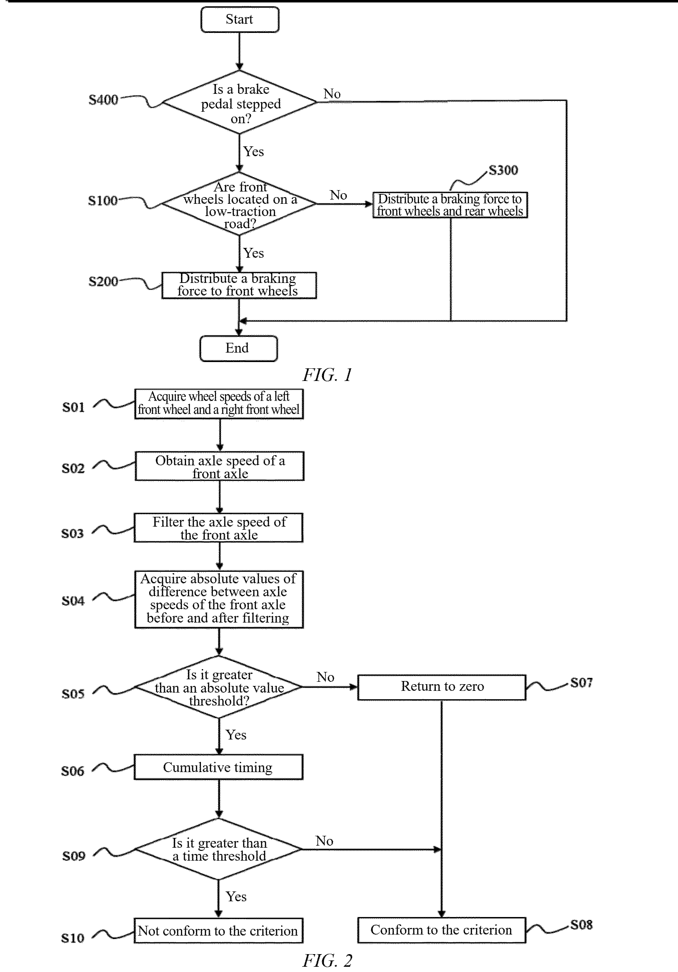

Referring to FIG. 1, which illustrates an implementation of a braking force distribution method according to the disclosure, the braking force distribution method mainly includes:
step S100, determining, in response to stepping on a brake pedal, whether front wheels are located on a low-traction road;
carrying out step S200 if the front wheels are located on the low-traction road: distributing a theoretical braking force depending on a stepped extent of the brake pedal to a front axle, i.e., distributing the theoretical braking force to the front wheels;
otherwise, carrying out step S300: distributing the theoretical braking force to both the front axle and a rear axle, i.e., distributing the theoretical braking force to both the front wheels and rear wheels.

It should be noted that the step signs mentioned above (and further be mentioned below) are merely used to distinguish between the steps and facilitate reference to the steps, and do not represent a sequence relationship between the steps, and the flowcharts including the drawings are merely examples of carrying out the method. Without significant conflict, the steps may be carried out in various orders or simultaneously.

It should be understood that the term "traction coefficient" or "road traction coefficient" is the ratio of a traction to a normal pressure of the wheels, and that the greater it is, the greater the available traction is, which means that a greater ground braking force can be achieved. Moreover, it should be known or appreciated by those skilled in the art that the term "low-traction road" relates to a road with a low traction coefficient, such as a snow-covered road, an ice-covered road or a muddy road. Specifically, the road traction coefficient of the low-traction road falls, for example, within a numerical range of less than 0.4. For example, the road traction coefficient is between 0.3 and 0.4 on a snow-covered (compacted) road; and the road traction coefficient is between 0.1 and 0.2 on an ice-covered road. On such a low-traction road, even with the ABS engaged, either the front wheels or the rear wheels are likely to be locked and dragged to slip due to a slightly large braking force of a brake.

In contrast, according to the main idea of the disclosure, if it is detected that the front wheels are located on the low-traction road, the control right of the ABS, the cooperative regenerative brake system (CRBS) or other braking controllers is deprived and handed over to a control element that can implement the braking force distribution strategy described above, such that the braking function of the rear wheels (including a left rear wheel and a right rear wheel) is disabled and braking is applied to only the front wheels. Therefore, in this way, it is possible to completely prevent side slip caused by locked rear wheels. Generally, such a braking force distribution strategy includes adjusting a braking force distribution ratio to the rear wheels or adjusting a hydraulic brake unit for the rear wheels in advance based on traveling conditions of the front wheels, thus achieving pre-control of the braking stability of the rear wheels. Correspondingly, if it is detected that the front wheels are not located on the low-traction road, the control right of distribution of a braking force is returned to the original ABS system, CRBS system or other brake controllers. In this case, optionally, the braking force can be distributed to both the front wheels and the rear wheels based on the braking force distribution ratio to the front and rear wheels or the front and rear axles that is calculated by the ABS system, CRBS system or other brake controllers alone or in coordination and co-operation. The braking force distribution ratio actually corresponds to the original braking force distribution strategy without activating the braking force distribution method according to the disclosure, and can be calculated according to the configuration of the vehicle itself. Herein, the disclosure is highlighted by transfer of the control right of braking force distribution.

Although the braking function of the rear wheels is disabled when it is detected that the front wheels are located on the low-traction road, the requirements in terms of braking efficiency can still be met. For example, on an ice and snow-covered road, a ground braking force provided by a brake is generally at a low level due to the limit of a maximum ground traction, and in this case, the front wheels alone can provide a uniform ground braking force. That is, on the ice and snow-covered road, a front wheel brake can achieve the braking efficiency substantially equal to the calculated theoretical braking force. The theoretical braking force depends on the stepped extent or the stepped position of the brake pedal.

After a driver steps on the brake pedal, it begins to detect road conditions for traveling of the front wheels (i.e., step S100 described above). The information about whether the brake pedal is stepped on and its stepped extent or stepped position may be read from a central control unit of the vehicle or directly acquired from associated sensors assigned to the brake pedal, which is indicated as step S400 in FIG. 1. Here, the central control unit of the vehicle calculates, based on the stepped extent of the pedal, a (total) theoretical braking force capable of reflecting a driver's demands, which is the sum of the braking forces to be applied to the front and rear wheels. It should be noted herein that in the following, unless otherwise specified, the term "front wheels" is a general term and represents a left front wheel and a right front wheel of a vehicle, and similarly, the term "rear wheels" is a general term and represents a left rear wheel and a right rear wheel of a vehicle.

Optionally, in step S100 described above, based on the degree of dynamic changes in the axle speed of the front axle and the magnitude of the braking force of the front wheel brake, the road conditions for traveling of the front wheels are identified and whether the front wheels are located on the low-traction road is inferred therefrom. In a steady traveling state of the wheels, i.e., in a state in which no recognizable slippage occurs, the axle speed of the front axle has little overall change. In contrast, the slippage of the wheels may cause a significant dynamic changes in the axle speed of the front axle. Compared with a common method for inferring the road conditions for traveling of the wheels based on only a wheel slippage rate, in which the slippage rate is obtained based on a wheel center speed and a wheel angular speed, this method for identifying the road traction conditions based on the fluctuations in the axle speed of the front axle is more accurate, because the wheel center speed introduced during a conventional calculation process varies slowly in the case of slippage and the estimate of the wheel center speed is less accurate. Further, the introduction of the braking force of the brake also further improves the accuracy in identifying the road conditions for traveling of the front wheels. For example, when the wheels are on a snow and ice-covered road, due to the involvement of the ABS, the braking force of the brake (which may also be understood as braking pressure of the brake) remains within a certain range, i.e., the braking force of the brake does not increase sharply due to sudden stepping on the brake pedal by driver. Generally, the braking force of the brake itself may also reflect the current road conditions for traveling of the wheels.

Specifically, in a possible implementation, step S100 includes:
substep S110, acquiring the axle speed of the front axle and the braking force of the front wheel brake in response to stepping on the brake pedal;
substep S120, acquiring an absolute value of a difference between the axle speeds of the front axle before and after filtering; and
substep S130, determining that the front wheels are located on the low-traction road if the absolute value is greater than a preset absolute value threshold and the braking force of the front wheel brake is less than a preset braking force threshold.

Here, the axle speed of the front axle is obtained from the wheel speeds of the left front wheel and the right front wheel, where the wheel speed is calculated by a simple method as the product of a wheel radius and the wheel angular speed. Taking into consideration the difference in traveling conditions between the left front wheel and the right front wheel, the axle speed of the front axle is calculated as its mathematical average. In substep S120, at least one-dimensional filtering is performed on the axle speed of the front axle by means of a filter, for example, one-dimensional filtering is performed by means of a PT1 filter, for eliminating the interferences with the axle speed of the front axle or with the wheel speeds of the front wheels from the road. The absolute value of the difference between the axle speeds of the front axle before and after filtering reflects the degree of dynamic change of the front axle (i.e., whether the front axle or the front wheel is in a stable state), where the greater the absolute value of the difference is, the greater the degree of dynamic changes of the front axle is and the more unstable the state of the front wheel is. When the absolute value of the difference exceeds the preset absolute value threshold, this means that the front wheels are in an unstable state and that the braking force applied to the front wheels should be limited in order to avoid the locking of the wheels. The absolute value threshold is set early by experiments based on different roads.

If it is detected that the degree of dynamic changes in the axle speed of the front axle is large and the braking force of the front wheel brake is less than the preset braking force threshold, it can be determined that the front wheels are located on the low-traction road, and thus a control signal is output to the hydraulic brake unit and the hydraulic brake unit of the rear wheels is controlled not to operate, and only a hydraulic brake unit for the front wheels operates.

In an optional implementation, a timing step, i.e., substep S140, is introduced to eliminate the interferences with the accuracy of determination from the road: performing timing if the absolute value is greater than the preset absolute value threshold, otherwise returning to zero. Correspondingly, it is determined that the front wheels are located on the low-traction road if a duration of the timing is greater than a preset time threshold and the braking force of the front wheel brake is less than the preset braking force threshold. Generally, it is determined that the front wheels are located on the low-traction road if the excessively high degree of dynamic changes in the axle speed of the front axle has been maintained for a period of time and the braking force of the front wheel brake is less than the preset braking force threshold.

Specifically, step S100 of the braking force distribution method according to the disclosure will be described in detail according to the sub-flowchart of FIG. 2. First, the wheel speeds of the front wheels, i.e., the wheel speed of the left front wheel and the wheel speed of the right front wheel, are acquired in response to the brake pedal being stepped on (i.e., step S01), and the axle speed of the front axle is subsequently obtained in step S02 by averaging mathematically. Step S01 and step S02 are included in step S110 as described above. Next, in step S03, the obtained axle speed of the front axle is filtered, and then the absolute value of the difference between the axle speeds of the front axle before and after filtering is obtained by means of subtraction in step S04. These two steps are included in step S120 as described above. Thereafter, in step S05, whether the absolute value of the difference is greater than the preset absolute value threshold is determined. If yes, the method proceeds with step S06 in which cumulative timing is performed; otherwise, the timing is reset to zero in step S07 and it is determined that the dynamic fluctuation of the front axle conforms to a criterion (i.e., step S08). Immediately following step S06, in step S09, whether the duration of the timing is greater than the preset time threshold is determined, if yes, it is determined that the dynamic fluctuation of the front axle does not conform to the criterion (i.e., step S10).

The results of determination obtained in step S08 and step S10 are used together with the information about the braking force of the front wheel brake to determine whether the front wheels are located on the low-traction road. If it is determined in the previous steps that the dynamic fluctuation of the axle speed of the front axle does not conform to the criterion and that the braking force of the front wheel brake is less than the preset braking force threshold, it is determined that the front wheels are located on the low-traction road, and subsequently, the braking force is distributed only to the front left wheel and the front right wheel of the front axle so as to prevent the rear wheels from locking and side slippage. If it is determined in the previous steps that the dynamic fluctuation of the axle speed of the front axle conforms to the criterion and/or that the braking force of the front wheel brake is not less than the preset braking force threshold, it is determined that the front wheels are located on the low-traction road, and subsequently, the braking force is distributed to both the front wheels and the rear wheels.

In summary, by stopping activating the hydraulic brake unit for the rear wheels and only distributing the braking force to the front wheels when detecting that the front wheels are located on the low-traction road, the braking force distribution method according to the disclosure can reliably prevent the dangerous phenomenon of locking and side slippage of the rear axle. In addition, in an embodiment of the braking force distribution method according to the disclosure, whether the front wheels are located on the low-traction road is determined according to the dynamic changes in the axle speed of the front axle and the magnitude of the braking force of the front wheel brake, which provides a relatively simple determination method. In addition, in another embodiment of the braking force distribution method according to the disclosure, the accuracy in determining the road conditions for traveling of the front wheels can be improved by introducing the step of timing.

In addition, the disclosure also relates to a computer-readable storage medium having a computer program stored thereon, where the computer program, when executed by a processor, causes the processor to carry out the above-described braking force distribution method for a vehicle. Here, various forms of computer storage media, including disks (such as a magnetic disk and an optical disc), cards (such as a memory card and an optical card), semiconductor memories (such as a ROM and a non-volatile memory), tapes (such as a magnetic tape and a cassette tape) and the like, may be used as the computer-readable storage medium.

Further, the disclosure also relates to a braking force distribution apparatus for carrying out such a braking force distribution method. The braking force distribution apparatus has a determination module and a calculation module in communication connection with each other, where the determination module is configured to determine whether front wheels are located on a low-traction road in response to stepping on a brake pedal and input a result of determination to the calculation module, and the calculation module is configured to conclude, based on the result of determination, to distribute a theoretical braking force to a front axle or to distribute the theoretical braking force to both the front axle and a rear axle. For the descriptions of the braking force distribution apparatus according to the disclosure, a reference may be correspondingly made to the descriptions of the braking force distribution method according to the disclosure, which will not be repeated herein.

Finally, the disclosure also relates to a vehicle having a braking force distribution apparatus as described above, for which a reference may be correspondingly made to the above descriptions of the braking force distribution apparatus and the braking force distribution method according to the disclosure, and which will not be repeated herein.

It should be understood that all of the above preferred embodiments are exemplary rather than limiting, and any modification or variation made by those skilled in the art to the specific embodiments described above without departing from the concept of the disclosure shall fall within the scope of legal protection of the disclosure.

## Claims

1. A braking force distribution method for a vehicle, comprising the following steps:
determining, in response to stepping on a brake pedal, whether front wheels are located on a low-traction road;
distributing a theoretical braking force depending on a stepped extent of the brake pedal to a front axle if the front wheels are located on the low-traction road;
otherwise, distributing the theoretical braking force to both the front axle and a rear axle.

2. The braking force distribution method according to claim 1, wherein whether the front wheels are located on the low-traction road is determined from a degree of dynamic changes in an axle speed of the front axle and a braking force of a front wheel brake.

3. The braking force distribution method according to claim 2, wherein the step of determining whether the front wheels are located on a low-traction road comprises the following substeps:
acquiring the axle speed of the front axle and the braking force of the front wheel brake in response to stepping on the brake pedal;
acquiring an absolute value of a difference between the axle speeds of the front axle before and after filtering; and
determining that the front wheels are located on the low-traction road if the absolute value is greater than a preset absolute value threshold and the braking force of the front wheel brake is less than a preset braking force threshold.

4. The braking force distribution method according to claim 3, wherein after acquiring the absolute value of the difference between the axle speeds of the front axle before and after filtering, the method further comprises the following substeps:
performing timing if the absolute value is greater than the preset absolute value threshold, otherwise returning to zero; and
determining that the front wheels are located on the low-traction road if a duration of the timing is greater than a preset time threshold and the braking force of the front wheel brake is less than the preset braking force threshold.

5. The braking force distribution method according to claim 3, wherein the acquired axle speed of the front axle is filtered by means of a PT1 filter.

6. The braking force distribution method according to any one of claims 2 to 5, wherein the axle speed of the front axle is obtained based on a wheel speed of a left front wheel and a wheel speed of a right front wheel.

7. The braking force distribution method according to any one of claims 1 to 5, wherein the theoretical braking force is distributed to both the front axle and the rear axle based on a braking force distribution coefficient output by an antilock brake system and/or a cooperative regenerative brake system of the vehicle.

8. A computer-readable storage medium having a computer program stored thereon, wherein the computer program, when executed by a processor, causes the processor to carry out the braking force distribution method according to any one of claims 1 to 7.

9. A braking force distribution apparatus for a vehicle, wherein the braking force distribution apparatus is configured to carry out the braking force distribution method according to any one of claims 1 to 7, wherein the braking force distribution apparatus has a determination module and a calculation module in communication connection with each other, the determination module is configured to determine whether front wheels are located on a low-traction road in response to stepping on a brake pedal and input a determination result to the calculation module, and the calculation module is configured to conclude, based on the determination result, to distribute a theoretical braking force to a front axle or to distribute the theoretical braking force to both the front axle and a rear axle.

10. A vehicle comprising a braking force distribution apparatus according to claim 9.
